# EUROPEAN PATENT SPECIFICATION

(11) **EP 3 159 638 B1**
(45) Date of publication and mention of the grant of the patent: **09.10.2019**
(21) Application number: 16194937.5
(22) Date of filing: 20.10.2016
(51) Int. Cl.: F27B 9/24, C04B 35/64, F16D 69/00, F16D 69/04

(54) **CONTINUOUS OVEN FOR FRICTION LAYERS OF BRAKE PADS AND LOADING METHOD THEREOF**
DURCHLAUFOFEN FÜR REIBSCHICHTEN VON BREMSBELÄGEN UND BESCHICKUNGSVERFAHREN DAFÜR
FOUR CONTINU POUR COUCHES DE FROTTEMENT DE GARNITURE DE FREIN ET PROCÉDÉ DE CHARGEMENT ASSOCIÉ

(30) Priority: 20.10.2015 IT UB20154803
(43) Date of publication of application: 26.04.2017
(73) Proprietor: ITT Italia S.r.l., 20020 Lainate (IT)
(72) Inventor: DE DOMINICIS, Sandro, 12032 Barge (IT)
(74) Representative: Studio Torta S.p.A.

(56) References cited:
- WO-A1-2014/162282
- DE-A1- 2 722 727
- US-A- 1 782 451

## Description

The present invention relates to a method and a device for the transportation of friction layers, for example brake pad friction layers, in a continuous heat treatment oven.

A pad for a disc brake comprises a backing plate, preferably a metallic one obtained by cutting or the like, and a layer of friction material applied to the backing plate using press forming.

According to an embodiment of a brake pad, after forming, the layer of friction material requires a heat heating or heat treatment cycle. During the heat cycle the friction material passes from a 'raw' [green] state to a 'baked' [crosslinked] state which confers many of the physical- mechanical and tribological properties of the friction material during its future use within a disc braking system of a vehicle. The heat treatment, usually by means of convective ovens, as described in WO2014/162282A, comprises controlled heating to a predetermined temperature. This treatment can be followed by subsequent heat cycles that envisage additional heating at different temperatures than those of the previous heat cycle. In normal continuous ovens for the heat treatment of brake pads, the latter are usually neatly deposited in a horizontal position on belts or trays and generally aligned heightwise or stacked. However, these configurations, even though they render compact installations, produce significant vertical heat gradients within the heat treatment chamber; in particular the lower area within the oven can be at a temperature that is significantly different than the upper area. This has an impact on the qualitative uniformity of the brake pad production lots.

The object of the present invention, as descibed in independent claims land 8, is to provide a device and a method which would substantially nullify the drawbacks associated with the vertical heat gradients to which the brake pads and/or friction layers are subjected and that would simultaneously limit the dimensions of the continuous oven. All very easily and at low cost. Such an invention, in particular for a continuous oven with a single belt or conveyor grid, allows its productivity to be roughly doubled while maintaining its size or else, with the same productivity, allows the size to be reduced by around half, all of this while processing everything more efficiently and at higher levels of quality.

The invention will now be described with reference to the accompanying drawings, which illustrate examples of non-limiting embodiments, and in particular:
- Figure 1 is a schematic side view, with elements partially in section view for clarity, of a continuous oven equipped with the transportation device according to the present invention;
- Figure 2 shows views of components of the transportation device of Figure 1;
- Figure 3 is a side view and a plan view of a robotized automatic loading and unloading station comprising the continuous oven of Figure 1; and
- Figure 4 is a schematic perspective view of some details of the automatic station of Figure 3.

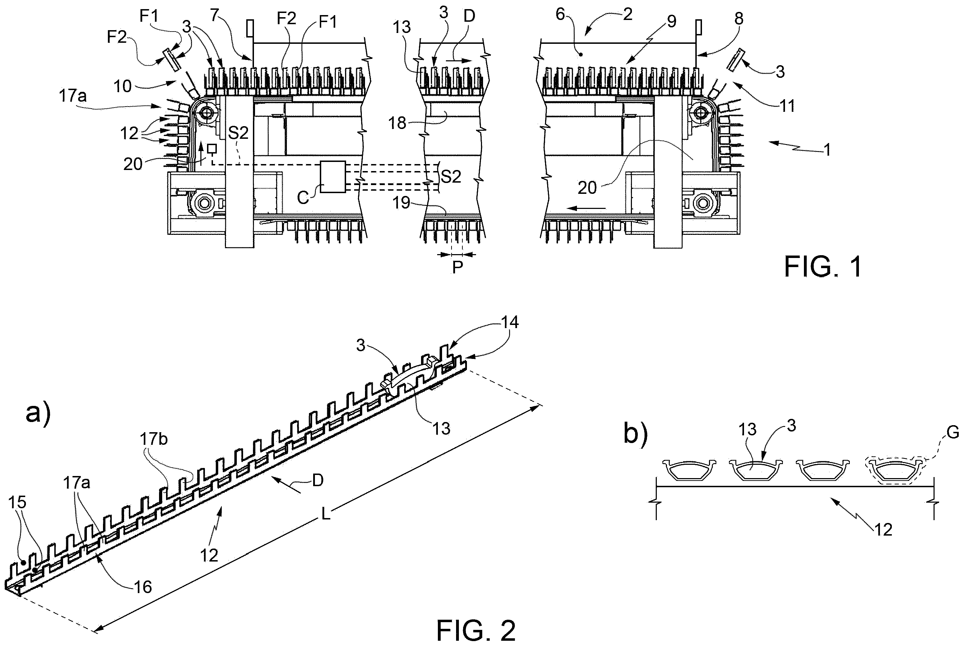

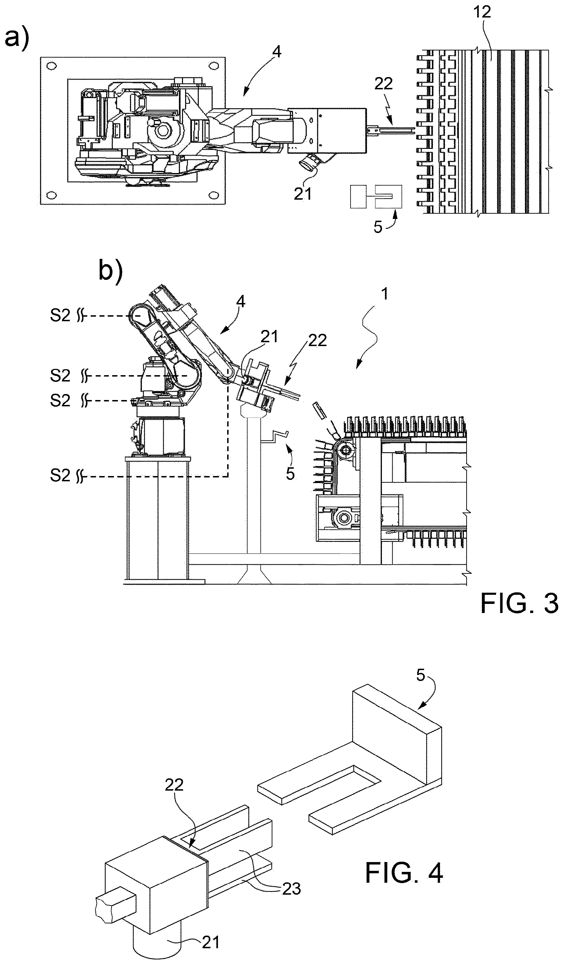

Illustrated in its entirety with 1 in Figures 1 and 3 is an automatic heat treatment station comprising an oven 2 of the stationary convective type for the treatment of brake pads 3, a loading arm 4 and support 5 for the brake pads 3. Preferably, but not exclusively, the automatic station 1 also comprises an upstream conveyor (not shown) for supplying, for example continuously, the loading arm 4 with brake pads 3 and a picking unit (not shown) for picking up the brake pads 3 from the oven 2 after the heat treatment. Preferably, the picking unit comprises an arm and a support which is the same as or functionally similar to the loading arm 4 and to the support 5.

The oven 2 comprises a heat treatment chamber 6 within which is performed all or part of the heat treatment of the brake pads 3, an input 7 and an output 8, both of which are traversed in use by the brake pads 3 respectively before and after a heat treatment warming step, and a continuous supply device 9 for transporting the brake pads 3 before, during and after the heat treatment heating step. The oven 2 also comprises fan coils (not shown) for generating a flow of air which warms, principally by convection, the brake pads 3 within the heat treatment chamber 6 in such a way as to define a stationary heat regime. The continuous supply device 9 is motorized in such a way as to move the brake pads 3 according to a predefined law of motion during the heat treatment. For example, the continuous supply device 9 moves the brake pads 3 within the heat treatment chamber 6 at a constant speed; and the heat treatment chamber 6, along a feed direction D of the continuous supply device 9, has a controlled and predefined temperature gradient. Within the heat treatment chamber 6, heat treatment is performed that is derived from the substantially stationary temperature profile which is maintained within the chamber 6 along the feed direction D by means of fan coils (not shown); and from the time it takes for a brake pad to travel from the input to the output.

According to the embodiment shown in Figure 1, the continuous supply device 9 comprises a loading area 10 where the loading arm 4 deposits the brake pads 3 onto the continuous supply device 9 and an unloading area 11 where the picking unit picks up the brake pads 3 after the heat treatment. Preferably, the loading area 10 is facing the entrance 7, and the unloading area 11 follows the exit 8, and both areas are external to the heat treatment chamber 6.

Advantageously, the continuous supply device 9 moves a plurality of pockets 12 within which the loading arm 4 deposits one or more brake pads 3 within the loading area 10. The pocket 12 houses the brake pad 3 with a degree of play, at least in the feed direction D. In this way the heat within the heat treatment chamber 6 reaches the entire outer surface of the brake pad 3, and in particular a friction layer 13 of the brake pad 3, in an appropriate manner. In order to further promote an exposure to the heat that is as homogeneous as possible, the pocket 12 is delimited in the feed direction D by pierced or apertured walls 14 such that flows of hot air can cross the walls 14 and enter the pocket 12 substantially parallel to the feed direction D when the brake pad 3 is within the heat treatment chamber 6. According to a preferred embodiment of the invention, the brake pads 3 are spaced apart by at least 10 mm in a direction that is perpendicular to the feed direction D such that the flows of hot air distribute the heat in a sufficiently homogeneous way. Moreover, again for the same reason, the walls 14 have at least 30 % empty space, i.e. they can be traversed by the flow of air in the direction D. A perforated wall has a plurality of openings most of which are delimited by a closed perimeter. An apertured wall has openings that are normally larger than a pierced wall and the perimeter of an aperture can also be open as shown in Figure 3. Each pierced or apertured wall more broadly defines a relief extension, and two successive walls linked together in the feed direction D (Figure 2) define a pocket 12.

According to a preferred embodiment of the invention, the pocket 12 is defined by walls having one or more windows 15 delimited by an open U-shaped perimeter. In particular, with reference to the condition in which the pocket 12 houses a brake pad 3, each window 15 is delimited at its bottom by a base 16 and by two opposing sides 17 arranged laterally with respect to the direction D. From the opposite side to the base 16 compared to the sides 17 the window 15 is open. In the embodiment of Figure 2, each wall 14 has a variety of sides 17 arranged substantially like a comb and defining a plurality of extensions.

To simplify the loading operation, the rear sides 17a of the pocket 12, with reference to the feed direction D, have a height that is less than that of the front sides 17b. This is particularly useful for promoting the loading of the brake pads 3 by gravity while limiting the risk of mechanical interference with the loading arm 4. The brake pads 3 are placed side by side within the pockets 12 along a straight line and perpendicular to the feed direction D. Furthermore, the loading arm 4 is designed to load, for example, one or two brake pads 3 at a time. In this configuration the relative position between the pockets 12 and loading arm 4 and/or the inclination of the pockets 12 changes progressively while the brake pads 3 are loaded in a row next to one another. As a result of this progressive movement of the pockets 12, the lower rear 17a sides 17 define a barrier that is easier to pass when the last brake pads 3 of the same row are deposited in their pockets and have achieved a substantially vertical orientation. Similarly, in the exemplary embodiment of Figure 2, the pocket 12 is made from a U-shaped straight section having a length L that is much greater than the maximum size of a processed brake pad 3. According to a preferred embodiment of the present invention, both the rear sides 17a and the front sides 17b are at least half or more of the height of the processed brake pad 3 (Figure 2).

The pockets 12 are preferably carried on board a conveyor having a feed branch 18 that conveys the brake pads 3 and a return branch 19 arranged below the feed branch 18. In this configuration, the pockets 12 are inclined with respect to vertical along transition zones 20 between the feed branch 18 and the return branch 19. In this position it is useful that the front sides 17 be higher than the rear sides. In this way, along a row of brake pads 3 arranged from right to left on the continuous feed device 9, the brake pads 3 of a most recently collected row could be very inclined but, nevertheless, supported in a stable manner by the front sides 17.

Advantageously, according to the present invention, the loading arm 4 picks up and deposits the brake pads 3 by means of the combination of an attraction device 21 and a fork 22. In this way it is possible to limit costs and space and to allow the position of a brake pad 3 to be changed with respect to the position in which the brake pads 3 are placed on the conveyors, i.e. with the friction layer 13 facing down. The attraction device 21 can be magnetic or pneumatic and picks up the brake pad 3 from the upstream conveyor and places it on the support 5. The attraction device 21 acts upon a first face F1 of the brake pad 3.

The support 5 is shaped in such a way as to enable the fork 22 to advance under the brake pad 3 and withdraw the latter acting upon a second face F2 opposite to the first face F1 with respect to a peripheral edge G of the brake pad 3 (fig. 2). For example the support 5 is shaped like a comb and the fingers 23 of the fork 22 advance under the brake pad 3 and raise the latter without interfering with the support 5. The brake pad 3 remains on board the fork 22 due to gravity and is deposited within the pocket 12 due to gravity by means of the rotation, for example downwards, of the fork 22 after the loading arm 4 has traveled along an appropriate two-dimensional or three-dimensional trajectory from the support 5 to the pocket 12. During the release of the brake pad 3 within the pocket 12, the fingers 23 can cross the windows 15 without interfering with the bases 16 and the sides 17.

In order to facilitate the deposit and withdrawal of the brake pads 3 into/from the pockets 12 and, at the same time, in order to maximize the filling of the heat treatment chamber 6, taking into account the average thickness of the brake pads 3, a pitch P of the pockets 12 in the feed direction D is at least 35 mm or greater. This is sufficient for obtaining adequately uniform heating over all of the surface of friction layer 13. Preferably also, in the direction of the pitch P, the pocket 12 has a minimum size of at least 30 mm.

Advantageously, the picking unit also comprises the attraction device 21 and the fork 22. According to a preferred embodiment of the present invention, the continuous feed device 9 is coordinated with the loading arm 4 and/or with an unloading arm by means of the first signals S1 from first sensors for monitoring the continuous feed device 9, second signals S2 from second sensors for monitoring the position of the loading arm 4 and/or of the unloading arm and a control unit C for processing the signals S1, S2 from the sensors and, on the basis of the law of motion of the continuous feed device 9, for processing a signal relative to the location of the brake pads 3 exiting the heat treatment chamber 6. Preferably, from the moment that the law of motion of the continuous feed device 9 can be measured precisely, the control over the position of the brake pads 3 exiting the treatment chamber 6 is open loop, thus allowing costs to be reduced. Preferably, the second sensors are angular position sensors mounted on board the loading arm 4 for the kinematic control of the latter. Preferably, the first sensors are also angular position sensors for detecting the position of rollers that engage with the grids which carry the pockets 12. For example, the speed of the continuous feed device 9 is constant, and therefore, after detecting the position in the direction D at the moment of releasing each brake pad 3 into its pocket 12, the control unit C can calculate moment by moment the position in the direction D of each brake pad 3. In addition, it is possible by means of the sensors that generate the signals S1 to detect the position along the width L of the pockets 12 at the moment when each brake pad 3 is released. In this way the control box C is able to calculate moment by moment the position of each brake pad 3 and to control the recovery pickup arm (not shown) after the heat treatment. According to the previously described exemplary embodiment, the signals S1 and S2 allow for the detection of the moment of release and the initial release position into the pocket 12 of each brake pad 3, it then being possible for the control unit C to calculate the position within the unloading area 11 based upon the law of motion of the pockets 12.

The advantages that the oven 2 according to the present invention enables are as follows.

It has been observed that the vertical temperature gradient within the treatment chamber 6 can cause excessive dispersion of the physical-mechanical and tribological properties of brake pads. This is promoted by the vertical stacking according to the prior art of the brake pads 3 on board the continuous feed device 9, i.e. stacked on board belts and trays. In order to render a single oven specifically suitable for processing various types of brake pads 3, despite the invention not being limited to such ovens, it was therefore preferred to study a position for the brake pad 3 that was different than that of horizontal stacking, which position envisages resting on the working face of the brake pad 3, i.e. the face F2. According to the present invention it has been verified that the predisposition of the continuous feed device 9 such that the pad 3 is inclined and rests on its peripheral edge G allows the number of brake pads 3 per unit area of the continuous feed device 9 to be increased. The load of the oven 2 is therefore increased per unit volume of the oven and, at the same time, the negative impacts of the vertical temperature gradient on the uniformity of the heat treatment applied to the brake pads 3 are reduced. The sides 17, respectively define a support to avoid overturning in a direction contrary to the direction D and a stop to avoid slipping in the direction D. In this way, the brake pads 3 are kept at an angle in a herringbone pattern with respect to the direction D. In the example of Figure 1, the brake pads 3 are inclined by 90° with respect to the direction D. Preferably, the brake pads are inclined at least +/-30°, even more preferably at least 45°. In this way more surface area is exposed to the flow of hot air that runs parallel to the feed direction D, but in the opposite direction.

The sides 17 are pierced or apertured in such a way as to promote the circulation of hot air and thus increase the heat exchange efficiency. This reduces the time spent within the treatment chamber 6 while maintaining high levels of quality.

By means of the combination of the attraction device 21 and the fork 22, it is possible to automate the loading and unloading process in such a way as to maintain the normal position of the brake pad 3 on the conveyors connecting the oven 2 to the stations within which are performed the forming and pressing of the friction layer 13. In this way the installation of the loading arm 4 does not impact the configuration of the production line. Furthermore, the arm 4, the attraction device 21 and the fork 22 are of simple construction and require reduced expenditure.

Finally, it is clear that it is possible to make changes or variations to the oven 2 according to the present invention without having to go beyond the scope of protection as defined by the attached claims.

In the embodiment of Figures 3, 4, the attraction device 21 and the fork 22 are arranged on the head of a 6-axis articulated arm. It is however possible that the loading arm 4 may be simpler, that is, with a lower degree of freedom, but still suitable for the trajectories to be followed in order to perform the loading and unloading of the brake pads 3.

The oven 2 can also be loaded by means of devices that do not comprise an arm 4.

The continuous feed device 9 can be any motorized track, articulated grid or other device that is capable of conveying pockets 12 continuously.

The fork 22 can either be simple or more complex, for example, double, as illustrated in Figure 4. Moreover, if necessary, the fork 22 may be replaced by a manipulator having gripper jaws, movable from an open position to a closed position, in order to grab and squeeze each brake pad 3 and perform the transport from the support 5 to the loading station 10. Both the manipulator and the fork 22 have relatively small dimensions that allow the pitch P to be reduced and that, therefore, allow high load capacities for the oven 2.

The pockets 12 in the lateral direction may be closed by means of walls that are apertured, pierced, or other barriers, or else fully open as shown in Figures 2, 3. In addition, each pocket 12, so as to be able to house brake pads 3 of various sizes, preferably has no intermediate baffle divider in the transverse direction. This makes the continuous feed device 9 be suitable for processing numerous models of brake pad 3 without requiring a specific manual installation for each brake pad geometry.

It is possible that the brake pad 3 may even be deposited within the Pocket 12 on its short side, that is, rotated 90° around the direction D compared to that shown in Figure 2. In fact, it has been verified that the impact of the vertical temperature gradient within the chamber 6 is tolerable if the brake pad 3 is set down on the short side.

It is also possible to apply the present invention to a single friction layer baking step, the layer then being glued in a known manner to its metal support plate.

It is possible that the unloading area 11 is followed by a slide (not shown) upon which the brake pads 3 are released by gravity from the continuous feed device 9. In the latter case the unloading from the pockets 12 is performed by gravity.

## Claims

1. A stationary convective oven (2) for processing friction layers (13) of brake pads (3), comprising a heat treatment chamber (6), a continuous supply device (9) having a loading area (10) for loading one or more friction layers (13) which are directed towards the heat treatment chamber (6) and an unloading area (11) where friction layers (13) arrive upon exiting the heat treatment chamber (6), the continuous supply device (9) comprising a plurality of relief extensions (17a, 17b) spaced along a feed direction (D) of the continuous supply device (9) so as to define, an anti-flipping abutment (17a) for the friction layers in a direction that is opposite to said direction (D) and a stop (17b) in said direction (D), both delimiting a pocket (12) which is adapted for housing the friction layer (13) in a resting position; **characterized in that:**
i)- the pocket (12) houses the friction layer (13) of the brake pads (3) with a degree of play, at least in the feed direction (D), so as the brake pads (3) are kept at an angle in a herringbone pattern with respect to the direction D;
ii)- the pocket (12) houses a plurality of brake pads (3) placed side by side within the pockets (12) along a straight line and perpendicular to the feed direction (D), on a peripheral edge (G) thereof;
iii)- the relief extensions (17a, 17b) comprise pierced or apertured walls.

2. The oven according to claim 1, **characterized in that** the relief extensions (17a, 17b) are defined by walls (14) and by at least a window (15) having, when the pocket (12) receives the brake pad (3), a base (16) and the relief extensions (17a, 17b) defined by sides projecting from the base (16), window (15) being opened on a side opposite to the base (16) with respect to the relief extensions (17a, 17b).

3. The oven according to claim 2, **characterized in that,** with respect to the feed direction (D), the anti-flipping abutment (17a) is shorter than the stop (17b); and **in that** both the rear sides (17a) and the front sides (17b) are at least half or more of the height of the processed brake pad (3).

4. The oven according to any of the preceding claims, **characterized in that** the minimum distance between the anti-flipping abutment (17a) and the stop (17b) of said pocket (12) is at least 30 mm along the feed direction (D).

5. The oven according to any of the preceding claims, **characterized in that** the pockets (12) are defined by linear profiles comprising the anti-flipping abutment (17a) and the stop (17b).

6. The oven according to any of the preceding claims, **characterized by** comprising a sensor to generate a signal (S2) and a control unit (C) programmed to store a release position of the friction layer (13) in the relative pocket (12) on the basis of the signal (S2) and to calculate the position in the unloading area (11) on the basis of the law of motion of the continuous supply device (9).

7. Automatic station, **characterized by** comprising an oven (2) according to any of the preceding claims; a controlled arm (4) having an attraction device (21) combined with a fork (22) or a manipulator to pick / release a friction layer (13) of a brake pad (3); and a support (5) shaped in such a way as to enable the fork (22) or manipulator to advance under the brake pad (3) to withdraw the latter.

8. A method of controlling an automatic station according to claim 7 in order to load the friction layer (13) onto the continuous supply device (9) comprising the steps of:
- picking up the friction layer (13) by means of the attraction device (21), the attraction device (21) acting on a first face (F1) of the friction layer (13) or of a brake pad (3) comprising the friction layer (13);
- releasing the friction layer (13) or the brake pad (3) onto the shaped support (5);
- picking up the friction layer (13) or the brake pad (3) from the shaped support (5) acting on a second face (F2) opposite to the first face (F1) with respect to peripheral edge (G);
- depositing the friction layer (13) or the brake pad (3) into the pocket (12) after performing a trajectory from the shaped support (5) to the continuous supply device (9).

9. The method of controlling according to claim 8, **characterized by** comprising the step of picking up the friction layer (13) or the brake pad (3) in the picking area (11) by means of an automatic arm controlled to reach the friction layer (13) in the position calculated by the control unit (C).

## Patentansprüche

1. Stationärer Konvektionsofen (2) zum Bearbeiten von Reibschichten (13) von Bremsbelägen (3), umfassend: eine Wärmebehandlungskammer (6), eine kontinuierliche Zuführvorrichtung (9) mit einem Ladebereich (10) zum Laden einer oder mehrerer Reibschichten (13), die auf die Wärmebehandlungskammer (6) gerichtet sind, und einen Entladebereich (11), in dem Reibschichten (13) beim Verlassen der Wärmebehandlungskammer (6) ankommen, wobei die kontinuierliche Zuführvorrichtung (9) eine Vielzahl von Entlastungsverlängerungen (17a, 17b) umfasst, die entlang einer Vorschubrichtung (D) der kontinuierlichen Zuführvorrichtung (9) beabstandet sind, um ein Anti-Kipp-Widerlager (17a) für die Reibschichten in einer Richtung, die der Richtung (D) entgegengesetzt ist, und einen Anschlag (17b) in der Richtung (D) zu definieren, wobei beide eine Tasche (12) begrenzen, die geeignet ist, die Reibschicht (13) in einer Ruheposition aufzunehmen; **dadurch gekennzeichnet, dass:**
i)- die Tasche (12) die Reibschicht (13) der Bremsbeläge (3) mit einem gewissen Spiel, zumindest in Vorschubrichtung (D), aufnimmt, sodass die Bremsbeläge (3) in einem Fischgratmuster in Bezug auf die Richtung D in einem Winkel gehalten werden;
ii)- die Tasche (12) eine Vielzahl von Bremsbelägen (3) aufnimmt, die nebeneinander in den Taschen (12) entlang einer geraden Linie und senkrecht zur Vorschubrichtung (D) an einer Umfangskante (G) davon angeordnet sind;
iii)- die Entlastungsverlängerungen (17a, 17b) durchbrochene oder mit Öffnungen versehene Wände umfassen.

2. Ofen nach Anspruch 1, **dadurch gekennzeichnet, dass** die Entlastungsverlängerungen (17a, 17b) durch Wände (14) und zumindest ein Fenster (15) definiert sind, das, wenn die Tasche (12) den Bremsbelag (3) aufnimmt, eine Basis (16) und die Entlastungsverlängerungen (17a, 17b) aufweist, die durch Seiten, die von der Basis (16) abstehen, definiert sind, wobei das Fenster (15) auf einer Seite, die der Basis (16) in Bezug auf die Entlastungsverlängerungen (17a, 17b) entgegengesetzt ist, geöffnet ist.

3. Ofen nach Anspruch 2, **dadurch gekennzeichnet, dass** das Anti-Kipp-Widerlager (17a) in Bezug auf die Vorschubrichtung (D) kürzer ist als der Anschlag (17b); und dass sowohl die Rückseiten (17a) als auch die Vorderseiten (17b) zumindest halb so hoch wie der bearbeitete Bremsbelags (3) oder noch höher sind.

4. Ofen nach einem der vorhergehenden Ansprüche, **dadurch gekennzeichnet, dass** der Mindestabstand zwischen dem Anti-Kipp-Widerlager (17a) und dem Anschlag (17b) der Tasche (12) mindestens 30 mm entlang der Vorschubrichtung (D) beträgt.

5. Ofen nach einem der vorhergehenden Ansprüche, **dadurch gekennzeichnet, dass** die Taschen (12) durch lineare Profile definiert sind, die das Anti-Kipp-Widerlager (17a) und den Anschlag (17b) umfassen.

6. Ofen nach einem der vorhergehenden Ansprüche, **dadurch gekennzeichnet, dass** er einen Sensor zum Erzeugen eines Signals (S2) und eine Steuereinheit (C) umfasst, die programmiert ist, um eine Freigabeposition der Reibschicht (13) in der entsprechenden Tasche (12) auf Grundlage des Signals (S2) zu speichern und die Position im Entladebereich (11) auf Grundlage des Bewegungsgesetzes für die kontinuierliche Versorgungsvorrichtung (9) zu berechnen.

7. Automatische Station, **dadurch gekennzeichnet, dass** sie umfasst: einen Ofen (2) gemäß einem der vorhergehenden Ansprüche; einen gesteuerten Arm (4) mit einer Anziehungsvorrichtung (21), die mit einer Gabel (22) oder einem Manipulator kombiniert ist, um eine Reibschicht (13) eines Bremsbelags (3) aufzunehmen / freizugeben; und einen Träger (5), der so geformt ist, dass die Gabel (22) oder der Manipulator unter dem Bremsbelag (3) vorrücken und diesen zurückziehen kann.

8. Verfahren zum Steuern einer automatischen Station nach Anspruch 7, um die Reibschicht (13) auf die kontinuierliche Zuführvorrichtung (9) zu laden, umfassend die Schritte:
- Aufnehmen der Reibschicht (13) mittels der Anziehungsvorrichtung (21), wobei die Anziehungsvorrichtung (21) auf eine erste Fläche (F1) der Reibschicht (13) oder eines Bremsbelags (3), der die Reibschicht (13) umfasst, wirkt;
- Freigeben der Reibschicht (13) oder des Bremsbelags (3) auf den geformten Träger (5);
- Aufnehmen der Reibschicht (13) oder des Bremsbelags (3) vom geformten Träger (5), der auf eine zweite Fläche (F2) wirkt, die der ersten Fläche (F1) in Bezug auf die Umfangskante (G) entgegengesetzt ist;
- Einbringen der Reibschicht (13) oder des Bremsbelags (3) in die Tasche (12) nach Beschreibung einer Trajektorie vom geformten Träger (5) zur kontinuierlichen Zuführvorrichtung (9).

9. Verfahren zum Steuern nach Anspruch 8, **dadurch gekennzeichnet, dass** es den Schritt des Aufnehmens der Reibschicht (13) oder des Bremsbelags (3) im Aufnahmebereich (11) mittels eines automatischen Arms umfasst, der gesteuert wird, um die Reibschicht (13) in der Position, die von der Steuereinheit (C) berechnet wird, zu erreichen.

## Revendications

1. Four à convection stationnaire (2) pour le traitement de couches de frottement (13) de garniture de frein (3), comprenant une chambre de traitement thermique (6), un dispositif d'alimentation continue (9) présentant une zone de chargement (10) destinée à charger une ou plusieurs couches de frottement (13) qui sont dirigées vers la chambre de traitement thermique (6) et une zone de déchargement (11) où des couches de frottement (13) arrivent lorsqu'elles quittent la chambre de traitement thermique (6), le dispositif d'alimentation continue (9) comprenant une pluralité d'extensions de décharge (17a, 17b) espacées le long d'une direction d'alimentation (D) du dispositif d'alimentation continue (9) de façon à définir, une butée anti-retournement (17a) pour les couches de frottement dans une direction opposée à ladite direction (D) et un arrêt (17b) dans ladite direction (D), délimitant tous deux une cavité (12) qui est adaptée pour accueillir la couche de frottement (13) dans une position de repos ; **caractérisé en ce que** :
i)- la cavité (12) accueille la couche de frottement (13) de la garniture de frein (3) avec un degré de jeu, au moins dans la direction d'alimentation (D), de sorte que la garniture de frein (3) soit maintenue à un angle dans un motif en chevrons par rapport à la direction D ;
ii)- la cavité (12) accueille une pluralité de garnitures de frein (3) disposées côte à côte à l'intérieur des cavités (12) le long d'une ligne droite et perpendiculaire à la direction d'alimentation (D), sur un bord périphérique (G) de celle-ci ;
iii)- les extensions de décharge (17a, 17b) comprennent des parois percées ou ajourées.

2. Four selon la revendication 1, **caractérisé en ce que** les extensions de décharge (17a, 17b) sont définies par des parois (14) et par au moins une fenêtre (15) ayant, lorsque la cavité (12) reçoit la garniture de frein (3), une base (16) et les extensions de décharge (17a, 17b) définies par des côtés faisant saillie de la base (16), la fenêtre (15) étant ouverte sur un côté opposé à la base (16) par rapport aux extensions de décharge (17a, 17b).

3. Four selon la revendication 2, **caractérisé en ce que,** par rapport à la direction d'alimentation (D), la butée anti-retournement (17a) est plus courte que l'arrêt (17b) ; et **en ce que** les deux côtés arrière (17a) et les côtés avant (17b) représentent au moins la moitié ou plus de la hauteur de la garniture de frein (3) traitée.

4. Four selon l'une quelconque des revendications précédentes, **caractérisé en ce que** la distance minimale entre la butée anti-retournement (17a) et l'arrêt (17b) de ladite cavité (12) est d'au moins 30 mm le long de la direction d'alimentation (D).

5. Four selon l'une quelconque des revendications précédentes, **caractérisé en ce que** les cavités (12) sont définies par des profiles linéaires comprenant la butée anti-retournement (17a) et l'arrêt (17b).

6. Four selon l'une quelconque des revendications précédentes, **caractérisé en ce qu'**il comprend un capteur pour générer un signal (S2) et une unité de commande (C) programmée pour stocker une position de libération de la couche de frottement (13) dans la cavité (12) relative sur la base du signal (S2) et pour calculer la position dans la zone de déchargement (11) à partir de la loi de mouvement du dispositif d'alimentation continue (9).

7. Poste automatique, **caractérisé en ce qu'**il comprend un four (2) selon l'une quelconque des revendications précédentes ; un bras commandé (4) ayant un dispositif d'attraction (21) associé à une fourche (22) ou un manipulateur pour saisir/libérer une couche de frottement (13) d'une garniture de frein (3) ; et un support (5) formé de manière à permettre à la fourche (22) ou au manipulateur d'avancer sous la garniture de frein (3) pour la retirer.

8. Procédé de commande d'un poste automatique selon la revendication 7 pour charger la couche de frottement (13) sur le dispositif d'alimentation continue (9) comprenant les étapes consistant à :
- ramasser la couche de frottement (13) au moyen du dispositif d'attraction (21), le dispositif d'attraction (21) agissant sur une première face (F1) de la couche de frottement (13) ou d'une garniture de frein (3) comprenant la couche de frottement (13) ;
- libérer la couche de frottement (13) ou la garniture de frein (3) sur le support profilé (5) ;
- ramasser la couche de frottement (13) ou la garniture de frein (3) du support profilé (5) agissant sur une seconde face (F2) opposée à la première face (F1) par rapport au bord périphérique (G) ;
- déposer la couche de frottement (13) ou la garniture de frein (3) dans la cavité (12) après avoir effectué une trajectoire du support profilé (5) au dispositif d'alimentation continue (9).

9. Procédé de commande selon la revendication 8, **caractérisé en ce qu'**il comprend l'étape de ramassage de la couche de frottement (13) ou de la garniture de frein (3) dans la zone de récupération (11) au moyen d'un bras automatique commandé pour atteindre la couche de frottement (13) dans la position calculée par l'unité de commande (C).
